# EUROPEAN PATENT SPECIFICATION

(11) **EP 4 544 177 B1**
(45) Date of publication and mention of the grant of the patent: **10.09.2025**
(21) Application number: 23732973.5
(22) Date of filing: 16.06.2023
(51) Int. Cl.: F03D 9/14, F03D 5/06, F03D 9/00, F03D 9/28, F03D 9/46

(54) **A SYSTEM AND METHOD FOR GENERATING AND STORING ENERGY FROM WIND**
SYSTEM UND VERFAHREN ZUR ERZEUGUNG UND SPEICHERUNG VON ENERGIE AUS WIND
SYSTÈME ET PROCÉDÉ DE PRODUCTION ET DE STOCKAGE D'ÉNERGIE À PARTIR DU VENT

(30) Priority: 23.06.2022 SE 2250775
(43) Date of publication of application: 30.04.2025
(73) Proprietor: Morina, Shpetim, 67365 Schwegenheim (DE); Heta, Ramiz, 13000 Drenas, Kosovo (ZZ)
(72) Inventor: HETA, Ramiz, 13000 DRENAS Kosovo (ZZ)
(74) Representative: Groth & Co. KB
(86) International application number: PCT/EP2023/066279
(87) International publication number: WO 2023/247361

(56) References cited:
- EP-B1- 3 070 328
- DE-A1- 2 826 001
- ES-A1- 2 408 336
- GB-A- 2 530 517
- US-A1- 2014 367 973
- US-B2- 8 427 000

## Description

### Technical field

The invention belongs to the field of power generation, particularly to the field of using wind to generate electricity.

### Technical background

Using wind to generate useful work is an old idea, much older than electricity. With the rise of electrical power, much thought has been put into using wind to generate electrical power with mixed success. There are fundamental problems. Natural winds occur irregularly, with varying strength, from varying directions and does so in a way that is difficult to predict with any accuracy for more than a few hours or days. Generally, days with much wind do not coincide with days with much demand for electricity. Furthermore, a major wind plant is generally considered an undesirable thing to have in one's neighborhood due to noise and other considerations. They also kill birds. One way around some of these problems is to have the wind plants in naturally wind places, such as at sea. That, however, adds to the cost of the construction of wind plants. Maintenance also becomes more difficult Also, the electricity must be transported a long way adding the cost and maintenance of long cables.

Many of these problems can be avoided by not relying on naturally occurring wind, but instead take advantage of the draft of cars passing through, preferably through a tunnel. Traffic through a tunnel varies, but compared to wind, it is more regular and predictable. People do not live in traffic tunnels so there are no neighbors that will be bothered by the plant, and it probably makes less noise than the traffic anyway. Traffic tunnels and other high traffic roads are typically located near or in high-population areas, so the electricity does not need to be transported far. A high traffic road is also an accessible place, reducing the cost of construction and maintenance.

However, some problems remain. Intense traffic generally do not coincide with high demand for electric power. Quite the contrary, when people are in their cars they are off the electrical grid and cannot consume the electricity from the electrical grid. What is needed is a solution that allows harvesting the wind energy created by passing cars in combination with some sort of practical way of storing the energy in some form and send it off to the grid in the form of electrical energy at a later time, perhaps a few hours later. This storage method should be of moderate cost and maintenance, be environmentally friendly -both in the global sense but also in the sense that it does not make the local environment unpleasant- and generally be more practical and economical than, say, a huge stack of batteries.

US9212653 is an apparatus for generating power from a wind to power propeller driven turbine at for instance an airport runway and has power generator actuated in response to wind from vehicle such as aircraft This actuates a hydraulic cylinder which pumps and store hydraulic fluid under pressure in an accumulator reservoir. There is nothing in this invention about storing the harvested energy until it is needed. While the patent does mention "storing" it is in a different sense. As it says in [0020] "the quantity of hydraulic fluid is released to power the hydraulic electrical generator when an optimum pressure level is achieved" id est the storing is for optimal efficiency of the device not for energy storing purposes in the context of the invention at hand -that is for hours or days.

US7964984 is a power generating system for remove monitoring such as a weather monitoring system. The purpose of the system is thus not to generate electricity for use in the electrical grid but self-electricity generation. The patent does disclose a system using intermittent wind from passing traffic to acuate a reciprocating device. It says in [0009] "The system includes a power generating apparatus carried by the frame and adapted to actuate when the panel reciprocates such that power is generated for use by a power consuming, power storing, or power transmitting device." but no power storage device is described except that batteries is mentioned as a possibility in [0038].

WO2014094680 is also a power generating system addressing the problem with generating power for a device, in particular a lamp, not for power generation for the grid. This patent discloses a system for utilizing wind from passing trains and it does also disclose a system for storing energy for use in lamps first as mechanical energy in a flywheel, then as electrical energy in batteries. It does not feature an energy storage system in the context of the invention at hand.

WO2014094672 is a power generation device for power production, not for use in a specific device. It uses suction from a high-speed train to actuate a reciprocating panel causing a liquid to be paused through a hydraulic motor that drives an electricity generator. However, there is no means for storing energy in the context of the invention at hand.

CN202645863U is a Chinese utility model describing of using wind from passing vehicles to actuate an aerofoil in a reciprocating motion which is then turned into a rotary motion which is used to generate electricity. No system for storage of energy is mentioned.

ES2408336 discloses a reciprocating movement turbine suitable for omnidirectionally capturing sudden gusts of wind coming from different directions, such as in a forest or a city and then use that to pump water as a form of energy storage.

CN207145144U is another Chinese utility model. It describes a system for electricity harvesting, storage and generation. It is a wind turbine causing a piston pump to pump water into a storage tower. The water can later be turned into electricity. However, the system uses natural wind and a turbine, not an actuating device and wind from passing vehicles.

CN212155070U is yet another Chinese utility model. It describes a water lifting device driven by wind. However, there it is not driven by the wind from passing vehicles but by natural wind.

WO2020187211 is a water pumping device using a windmill to drive a piston assembly to pump gas or liquid. It is not intended for generating electricity and it uses a windmill with natural energy, not a reciprocating device driven by passing vehicles.

None of these would inventions fulfills the need for a solution that allows harvesting the wind energy created by passing cars in combination with some sort of practical, convenient and relatively inexpensive way of storing the energy in some form, and send it off to the grid in the form of electrical energy at a later time

### Summary of the invention

A solution to this problem is to capture the wind created by passing vehicles with one or more single, separate sail, board or blades. This gives rise to a reciprocating motion in the one or more single separate sail, board or blade. This actuating motion is used for actuating one or more pumps (4) that pumps a fluid against gravity into an upper reservoir. This generates potential energy. The potential energy of the water can, immediately or at a later time, be released by letting the fluid flow back by gravity into a lower reservoir. The flow can then be used to drive one or more turbines to generate electrical power.

Advantages with this solution includes:
Compared with conventional wind turbines, this source of wind is reliable and predictable. Unlike a conventional wind turbine, it works when there is little natural wind and it works when there is much natural wind (a conventional wind turbine needs to be turned off at around 22 m/s or more wind).

Also, the lack of dependence on natural wind means that it does not need to be placed in a windy location. Such locations are often difficult to reach -such as on heights or at sea. This invention works best in accessible places with plenty of traffic. The ease of access translate into lower cost and lower environmental impact of construction installment and maintenance. Maintenance of a single 2-4MW wind turbine costs 42,000-48,000 $ a year according to various data published online on wind turbines. Also, the sheer height of a conventional turbine in an of itself is a problem and a danger. The current invention can be made much closer to the ground.

This invention is, unlike a conventional wind turbine, not likely to cause damage to or kill birds, being placed where it is much traffic and not moving as fast or with as much force as the blades of a conventional wind turbine.

The energy storage system can be made with environmentally friendly material, particularly in comparison with a large battery park.

The storage system can store energy for a long time with little loss. There might be some loss due to evaporation if water is stored, but that might be compensated by rain and snow.

Water pumping can be done over long distances (turbines and fluid pumping can also be at considerable heights with each other) avoiding the transmission network as it has high construction and maintenance costs, poses a risk to the health of living world and the area under the network and around it becomes almost impossible to use.

Due to moderate initial investment and low maintenance compared to wind and solar power, return on investment is expected to be faster on the current invention.

The system of the invention is more reliable and generates electricity in roughly equal amounts in every season. This is advantageous compared to solar energy in a temperate to cold climate where the solar energy is mostly created in the summer while energy is mostly needed in the winter for heating.

The space immediately close to a road is generally not a desirable space to be or live, so unlike wind or solar power, it does not take up a space desirable for living, recreation, agriculture or other purpose.

Unlike conventional wind turbines, the system of the invention is not likely to be struck by lightning. The invention can have the turbine and other electricity generating gear places far from other parts, increasing fire safety.

Existing natural lakes can also be used for reservoirs for the system of this invention.

In regions where temperatures are often low temperatures, anti-freeze additives can be used and some of the equipment can be installed underground or insulated against freezing.

### Brief description of the drawings

Fig 1 shows a schematic view of the wind from passing traffic being harvested for storage in an upper reservoir.
Fig 2 shows a schematic but more detailed view of how the actuating motion is made to pump water that can be used for electricity production.

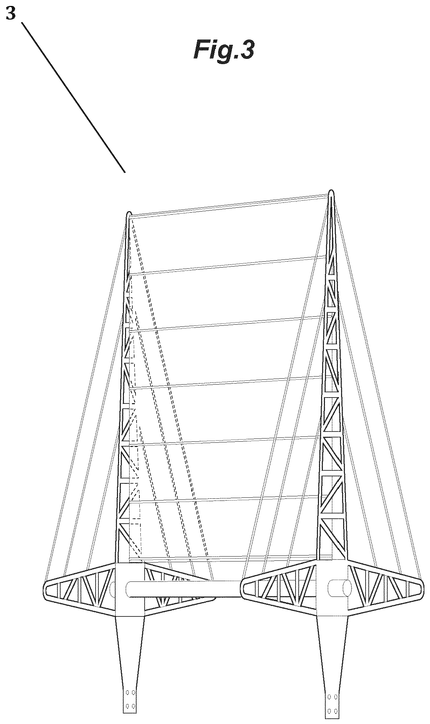

Fig 3 shows an example of how the board, blade or sail that captures the wind of a passing vehicle and turns it into a reciprocating motion can look like. It is the same board, blade or sail as in Fig 2.

### Detailed description

Legend for the figs:
1: the system, the invention as a whole
2: passing vehicles that give rise to wind
3: single separate sail, board or blade (3) (as opposed to multiple blades in a propeller or turbine) in a reciprocating motion
4: pump to pump fluid
5: lower reservoir to store fluid
6: upper reservoir to store fluid and potential energy
7: turbine to generate electrical power

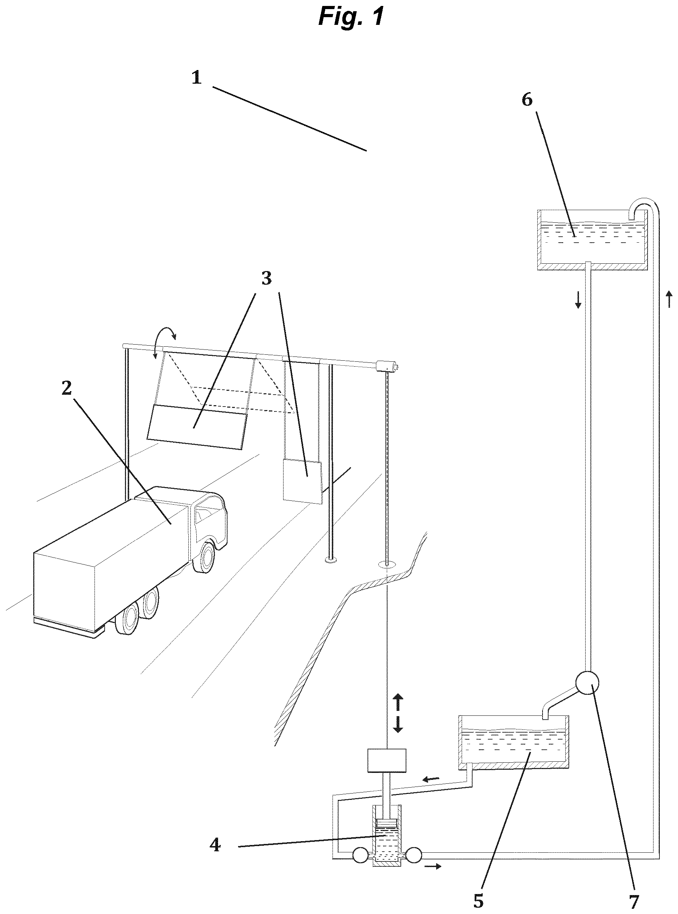

In fig. 1 we see a schematic view of how the boards or sails hang from above, one sail placed directly vehicles and one to the side. They move by the draft of passing vehicles. The sail should be placed as close as possible to the movement of vehicles in both these sails (as close as the traffic safety and traffic norms allow that is). The width of the sail, board or blade should be about 2.5-3m approximately the width of the road, but it is better determined by the aerodynamics experts, should be built so as not to obstruct the other lane of traffic movement in the same or opposite direction, in a word we can say: the force of air during the movement of vehicles hitting the sail must always be greater than the friction that occurs with the air in the rest behind the sail. The distance should be sufficient between the sails to not hinder the mutual movement between them. The height of the sail should be installed where the wind power from the vehicles hits more and its dimensions should be suitable with the area where the wind from the vehicles hits hard. Even for the sail on the side of the road, it more captures the power of winds from small vehicles (if placed in the lane for fast movement of small vehicles, small vehicles are less efficient in the high sail due to distance), while large vehicles can hit almost on both sails but not simultaneously, the sails should not be placed on the same axle, only if the distance of the vehicle from the sail up and to the side is the same, e.g. as in the train.

The pump is this embodiment can be a piston pump.

**In** this embodiment can also operate with a small load enough to beat the internal piston to rub against its cylinder by calculating the water pressure (gravity allows the sail to return to a vertical position after hit) but the inlet-outlet connection of the fluid must be changed, the load material can be made from the recycling of heavy metals, batteries out of use or recycled if they do not cause pollution, concrete etc. Water pipes can be made of recycled plastic if they can withstand high pressures. The load should be semi-oval in shape at the top.

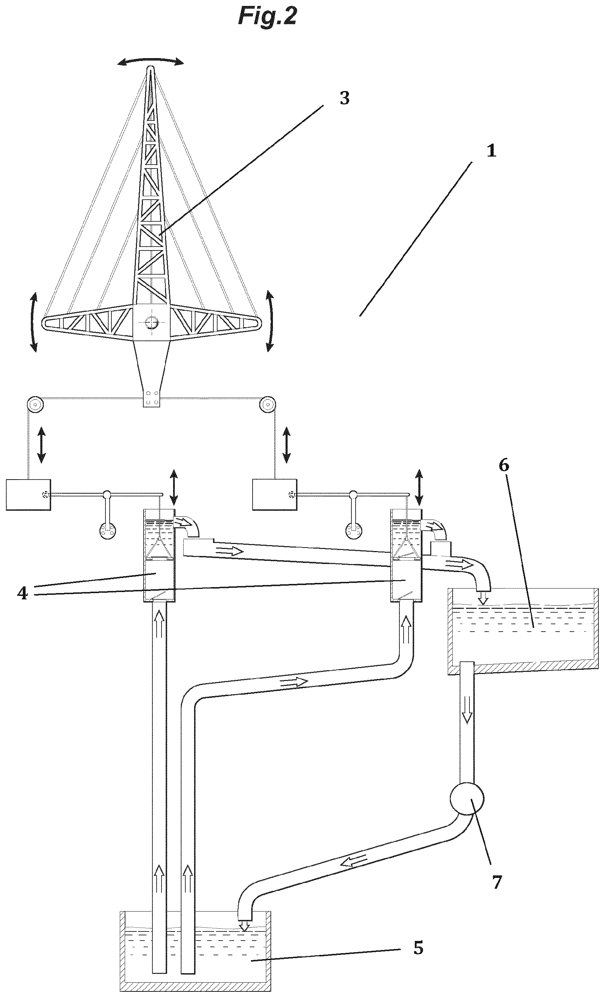

In fig. 2 we have presented a sail, but it can also be a board or slab of lightweight material, alloy or plastic, wrapped in a windproof material or similar material. This construction is mechanically connected to the shaft which moves in bearings, makes reciprocal movements and on the other hand makes it possible to pull the metal ropes back and forth by pulling a certain load in the opposite direction of gravity for pumping fluid.

In fig. 2, if construction conditions allow, loads and pistons can be installed under objects, for example: if we have to install 5 pistons on both sides of the object (10 pistons), if we have space under the object, we can install only 5 of them, ie 50% less pistons and the load in this form reduces the investment cost.

If a sail that has 2 or more pillars raised high and has a large width can be placed on 2 or more axes in the same direction, the width and height of the sail should be as large as possible.

The surface of contact with the wind should be as large as possible and its shape should be such that they have the greatest possible friction with the wind. In order to capture as much wind as possible, sails should be built as large as possible both in height, but also have as much surface area between the two single pillars in fig 2' i.e. as much width as possible. Materials used should be as light as possible, for the pillars materials such as carbon fiber might be useful. The area between the pillars that might be textile (possibly even recycled). It is important that it is impermeable to air. The possibility of capturing the direction of the wind should be considered if the technical conditions allow. To keep weight down the materials should be as thin as possible without making the construction to fragile and susceptible to wear and tear. We can imagine placing the sail in fig 2 on a pivotable axle to allow the sail to turn to capture wind from different directions.

In many ways a tunnel is the most suitable place to install the system but we can easily imagine other places. A regular road, road without a tunnel is an obvious alternative. This system can probably be installed on large ferries (for the ferry's needs), we always have water, maybe even strong winds, it can be installed under bridges. An important aspect of fig 2 is when it is installed in a region with turbulent winds above 80km / h or we should try to capture continuous winds at high altitudes in each region.

According to the scheme we have presented, the boards make reciprocal movements even if the wind speed is low. The movement must be done at a certain angle so that the load allows us to turn the blade to its previous position, the vertical position and in this position the wind hits the board with greater force.

The amount of fluid that rises and at what height, depends on several factors:
- Wind speed,
- The lightest weight of the blade but resistant to wind blows,
- As large as possible blade surface in contact with air,
- The ratio between the height of the board and the short arm under the shaft to which the ropes are tied,
- The volume of the piston and its shape (the longer the piston the more efficient it is because the same load is used to pump larger amounts of fluid) etc.

Such facilities are easy to build, have low cost and also for the construction of such a facility by recyclable materials which can be used in those parts where possible. Natural lakes can be used to store water (potential energy) for exploitation as needed, the invention works with the same amount of water and can also use rainwater or wastewater after treatment in the respective plants.

The system can also be integrated with one or more electricity driven apparatuses such as apparatuses useful in a road tunnel. This could be night lights, emergency lights, data sharing beacons part of a mesh network, emergency signal beacons, commercial displays with lightning, CO₂ removers, air cleaners, wild life detergent (such as speakers), specifically bird detergents.

The term "fluid" used in the claims refers to a substance that flows, that is a liquid or a gas. Water is the obvious choice of fluid, being cheap and easily available. Other fluids are possible though, and might be advantageous, particularly in a system where fluid loss is small. A heavier fluid allows for more storage of energy. A fluid with lower freezing point removes or reduces the problem with water freezing at low temperatures. Even if water is used, it should not be assumed this is water only. Additives might be useful such as anti-freeze to prevent freezing below zero degrees Celsius.

As mentioned, with this idea you can pump all the substances that pass into the piston maybe even a gas such as air, though that is probably not practical except in special circumstances. One such special situation might be from a region with strong winds or usually the coast in a region with less wind to the reservoir below the turbine, then with the help of a device that makes it possible under air pressure to raise water up and store it as potential energy (air can not be saved if we do not turn it into potential water energy). The reason is that if it is a large amount of water that we have used for energy production, it has a cost to return to the place where it is pumped (if it is high distance) only if combined with a river, sea or something else, but pumping air at short distances is not worth implementing.

The phrase "single separate" such as in "single, separate sail, board or blade" should be interpreted as opposed to several blades in a turbine or propeller. It should not be interpreted to mean that there can only be one sail, board or blade. Nor should it be interpreted as sails, board or blades being completely physically separated (e.g. in separate rooms or very far apart).

The phrase "pumps a fluid against gravity generating potential energy" used in claim 1 should not be interpreted as the fluid only moving in the upward (against gravity) direction.

The phrase "immediately or at a later time allow the fluid to flow from the upper reservoir by gravity" together with the phrase "driven to generate electrical power by the flow of the fluid when the fluid flows by gravity from the upper reservoir (6) to the lower reservoir (5)" in claim 1 should be interpreted as there is a choice between generating electricity now or at a later time. This is an important feature of the invention, the ability to generate electricity at a later time when it is needed. The choice is, of course, subject to practical limitations. If the upper reservoir is full there might be a "use it or lose it" situation. Furthermore the "choice" is not necessarily made directly by a human, and it is usually preferable with some sort of automatic system.

The phrase "essentially water" used in claim 3 means it is mostly water but probably not 100% pure. The water might contain some additive like anti-freeze and non-deliberate impurities might also occur.

Many different embodiments have been disclosed herein, in connection with the above description and the drawings. Features of these embodiments can be combined. For instance. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to support claims to any such combination or subcombination.

It will be appreciated by persons skilled in the art that the present embodiments are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A system (1) for wind energy capture and storing of the captured energy in the form of potential energy and generation of electricity, the system comprising:
- one or more wind capturing device (3) adapted to capture wind to create a reciprocating motion,
- one or more pumps (4) adapted to use the reciprocating motion for actuating the pump to pump a fluid against gravity thereby generating potential energy
- an upper reservoir (6) adopted to receive the fluid which is pumped against gravity and to store the fluid and to, immediately or at a later time, allow the fluid to flow from the upper reservoir by gravity,
- a lower reservoir (5), adopted to store the fluid, to have the fluid pumped from the lower reservoir against gravity and to, immediately or at a later time, receive the fluid when the fluid is allowed to flow back into the lower reservoir by gravity
- a place where vehicles (2) pass, such as a road or railway, said passing of said vehicles (2) at the place causes a draft wind, and
- a turbine or turbines (7) adapted to be driven to generate electrical power by a flow of the fluid when the fluid flows by gravity from the upper reservoir (6) to the lower reservoir (5), **characterized in that** the one or more wind capturing device (3) is one or more single separate sail, board or blade (3) adapted to use the thrust of wind from passing vehicles (2) to create said reciprocating motion, and **in that** the one or more single separate sail, board or blade (3) is placed in immediate vicinity to the place where vehicles (2) pass, such as a road or a railway, in a manner designed to catch the draft wind of passing vehicles.

2. The system (1) according to claim 1 further **characterized in that** the fluid is a liquid.

3. The system (1) according to claim 2 further **characterized in that** the liquid is essentially water.

4. The system (1) according to claim 3, further **characterized in that** at least one of the lower reservoir (5) and upper reservoir (6) is a reservoir of water, such as a natural lake or a man-made reservoir that existed in situ prior to the installation of the system.

5. The system (1) according to one of the previous claims where at least one of the one or more single, separate sail, board or blade (3) are essentially placed above the passing vehicles (2).

6. The system (1) according to one of the previous claims where at least one of the one or more single, separate sail, board or blade (3) are essentially placed to the side of the passing vehicles (2).

7. The system according to claim 6 where the passing vehicles are on a road or roads, the road or roads have driving lanes and the driving lanes have boundaries and at least one of the one or more single separate sail, board or blade (3) are essentially placed so that the closest boundary of the nearest driving lane is 2-4 meters from the closest part of the sail, board or blade (3).

8. The system according to one of the previous claims where there are at least two single separate sails, boards or blades (3) and they are not placed on the same axle.

9. The system (1) according to one of the previous claims where the one or more single separate sail, board or blade (3) are essentially placed within a road tunnel.

10. The system (1) according to one of the previous claims where the pumped fluid flows in pipes that are at least partially made of recycled plastic, preferably where the weight percentage of recycled material is at least 10%, more preferably at least 20%, even more preferably 30% most preferably at least 50%.

11. The system (1) according to one of the previous claims where the sail, board or blade (3) comprises textile material, such as textile material mounted on a frame of non-textile material.

12. The system (1) according to claim 11 where the textile material is at least partially made of recycled material, preferably where the weight percentage of recycled material in the textile material is at least 10%, more preferably at least 20%, even more preferably 30% most preferably at least 50%.

13. The system (1) according to one of the previous claims where the pump or pumps (4) are piston pumps.

14. A method for wind energy capture and storage and generation of electricity, **characterized in that** it uses the system (1) of one of the previous claims.

## Patentansprüche

1. System (1) zum Einfangen von Windenergie und Speichern der eingefangenen Energie in Form von potenzieller Energie und Erzeugung von Strom, wobei das System Folgendes umfasst:
eine oder mehrere Windfangvorrichtungen (3), die angepasst sind, um Wind einzufangen, um eine Wechselbewegung zu kreieren,
eine oder mehrere Pumpen (4), die angepasst sind, um die Wechselbewegung zum Betätigen der Pumpe zu verwenden, um ein Fluid gegen die Schwerkraft zu pumpen und dadurch potenzielle Energie zu erzeugen
ein oberes Reservoir (6), das angepasst ist, um das gegen die Schwerkraft gepumpte Fluid aufzunehmen und zu speichern und sofort oder zu einem späteren Zeitpunkt zu ermöglichen, dass das Fluid durch die Schwerkraft aus dem oberen Reservoir abfließt, ein unteres Reservoir (5), das angepasst ist, um das Fluid zu speichern, das Fluid gegen die Schwerkraft aus dem unteren Reservoir pumpen zu lassen und sofort oder zu einem späteren Zeitpunkt das Fluid aufzunehmen, wenn dem Fluid ermöglicht wird, durch die Schwerkraft in das untere Reservoir zurückzufließen einen Ort, an dem Fahrzeuge (2) vorbeifahren, wie etwa eine Straße oder eine Eisenbahnstrecke, wobei das Vorbeifahren der Fahrzeuge (2) an dem Ort einen Fahrtwind bewirkt, und
eine Turbine oder Turbinen (7), die angepasst sind, um elektrische Energie durch einen Fluss des Fluids zu erzeugen, wenn das Fluid durch die Schwerkraft von dem oberen Reservoir (6) zu dem unteren Reservoir (5) fließt, **dadurch gekennzeichnet, dass** die eine oder mehrere Windfangvorrichtungen (3) ein oder mehrere einzelne Segel, Bretter oder Flügel (3) sind, die angepasst sind, um den Windstoß von vorbeifahrenden Fahrzeugen (2) zu verwenden, um die Wechselbewegung zu kreieren, und dass das eine oder die mehreren einzelnen, separaten Segel, Bretter oder Flügel (3) in unmittelbarer Nähe des Ortes angeordnet sind, an dem Fahrzeuge (2) vorbeifahren, wie etwa eine Straße oder eine Eisenbahnstrecke, in einer Art und Weise, die dazu ausgelegt ist, den Fahrtwind von vorbeifahrenden Fahrzeugen zu erfassen.

2. System (1) nach Anspruch 1, ferner **dadurch gekennzeichnet, dass** das Fluid eine Flüssigkeit ist.

3. System (1) nach Anspruch 2, ferner **dadurch gekennzeichnet, dass** die Flüssigkeit im Wesentlichen Wasser ist.

4. System (1) nach Anspruch 3, ferner **dadurch gekennzeichnet, dass** mindestens eines des unteren Reservoirs (5) und oberen Reservoirs (6) ein Wasserreservoir ist, wie etwa ein natürlicher See oder ein künstliches Reservoir, das vor der Installation des Systems an Ort und Stelle existierte.

5. System (1) nach einem der vorhergehenden Ansprüche, wobei mindestens eines des einen oder der mehreren einzelnen, separaten Segel, Bretter oder Flügel (3) im Wesentlichen über den vorbeifahrenden Fahrzeugen (2) platziert ist.

6. System (1) nach einem der vorhergehenden Ansprüche, wobei mindestens eines des einen oder der mehreren einzelnen, separaten Segel, Bretter oder Flügel (3) im Wesentlichen an der Seite der vorbeifahrenden Fahrzeuge (2) platziert sind.

7. System nach Anspruch 6, wobei die vorbeifahrenden Fahrzeuge auf einer Straße oder Straßen sind, wobei die Straße oder Straßen Fahrspuren aufweisen und die Fahrspuren Begrenzungen aufweisen und mindestens eines des einen oder der mehreren einzelnen, separaten Segel, Bretter oder Flügel (3) im Wesentlichen so platziert sind, dass die nächstgelegene Begrenzung der am nächsten liegenden Fahrspur 2 bis 4 Meter von dem nächstgelegenen Teil des Segels, Bretts oder Flügel (3) entfernt ist.

8. System nach einem der vorhergehenden Ansprüche, wobei mindestens zwei einzelne, getrennte Segel, Bretter oder Flügel (3) vorhanden sind und diese nicht auf derselben Achse platziert sind.

9. System (1) nach einem der vorhergehenden Ansprüche, wobei das eine oder die mehreren einzelnen, separaten Segel, Bretter oder Flügel (3) im Wesentlichen innerhalb eines Straßentunnels platziert sind.

10. System (1) nach einem der vorhergehenden Ansprüche, wobei das gepumpte Fluid in Rohren fließt, die mindestens teilweise aus recyceltem Kunststoff hergestellt sind, wobei der Gewichtsprozentsatz an recyceltem Material bevorzugt mindestens 10 %, mehr bevorzugt mindestens 20 %, noch mehr bevorzugt 30 % und am meisten bevorzugt mindestens 50 % ist.

11. System (1) nach einem der vorhergehenden Ansprüche, wobei das Segel, Brett oder der Flügel (3) textiles Material umfasst, wie etwa textiles Material, das auf einem Rahmen aus nichttextilem Material angebracht ist.

12. System (1) nach Anspruch 11, wobei das textile Material mindestens teilweise aus recyceltem Material hergestellt ist, wobei der Gewichtsprozentsatz an recyceltem Material bevorzugt mindestens 10 %, mehr bevorzugt mindestens 20 %, noch mehr bevorzugt 30 % und am meisten bevorzugt mindestens 50 % ist.

13. System (1) nach einem der vorhergehenden Ansprüche, wobei die Pumpe oder Pumpen (4) Kolbenpumpen sind.

14. Verfahren zum Einfangen von Windenergie und zur Speicherung und Erzeugung von Strom, **dadurch gekennzeichnet, dass** es das System (1) nach einem der vorhergehenden Ansprüche verwendet.

## Revendications

1. Système (1) de capture d'énergie éolienne et de stockage de l'énergie capturée sous forme d'énergie potentielle et de production d'électricité, le système comprenant :
- un ou plusieurs dispositifs de capture du vent (3) conçus pour capturer le vent afin de créer un mouvement alternatif,
- une ou plusieurs pompes (4) conçues pour utiliser le mouvement alternatif pour actionner la pompe afin de pomper un fluide contre la gravité, générant ainsi de l'énergie potentielle
- un réservoir supérieur (6) conçu pour recevoir le fluide qui est pompé contre la gravité et pour stocker le fluide et pour, immédiatement ou ultérieurement, permettre au fluide de s'écouler du réservoir supérieur par gravité,
- un réservoir inférieur (5), conçu pour stocker le fluide, pour que le fluide soit pompé du réservoir inférieur contre la gravité et pour, immédiatement ou ultérieurement, recevoir le fluide lorsque le fluide est autorisé à retourner dans le réservoir inférieur par gravité
- un endroit où passent des véhicules (2), comme une route ou une voie ferrée, ledit passage desdits véhicules (2) à cet endroit provoque un vent de courant d'air, et
- une turbine ou des turbines (7) conçues pour être entraînées pour générer une puissance électrique par un écoulement du fluide lorsque le fluide s'écoule par gravité du réservoir supérieur (6) au réservoir inférieur (5), **caractérisé en ce que** les un ou plusieurs dispositifs de capture du vent (3) sont une ou plusieurs voiles, planches ou pales séparées uniques (3) conçues pour utiliser la poussée du vent des véhicules passant (2) pour créer ledit mouvement alternatif, et **en ce que** les une ou plusieurs voiles, planches ou pales séparées uniques (3) sont placées à proximité immédiate de l'endroit où passent les véhicules (2), comme une route ou une voie ferrée, d'une manière conçue pour capter le vent de courant d'air des véhicules passant.

2. Système (1) selon la revendication 1, caractérisé également en ce que le fluide est un liquide.

3. Système (1) selon la revendication 2, caractérisé également en ce que le liquide est essentiellement de l'eau.

4. Système (1) selon la revendication 3, caractérisé également en ce qu'au moins l'un du réservoir inférieur (5) et du réservoir supérieur (6) est un réservoir d'eau, tel qu'un lac naturel ou un réservoir artificiel qui existait in situ avant l'installation du système.

5. Système (1) selon l'une des revendications précédentes, dans lequel au moins l'une des une ou plusieurs voiles, planches ou pales séparées uniques (3) sont essentiellement placées au-dessus des véhicules passant (2).

6. Système (1) selon l'une des revendications précédentes, dans lequel au moins l'une des une ou plusieurs voiles, planches ou pales séparées uniques (3) sont essentiellement placées à côté des véhicules passant (2).

7. Système selon la revendication 6, dans lequel les véhicules passant se trouvent sur une ou plusieurs routes, la route ou les routes ont des voies de circulation et les voies de circulation ont des limites et au moins une des une ou plusieurs voiles, planches ou pales séparées uniques (3) est essentiellement placée de sorte que la limite la plus proche de la voie de circulation la plus proche est à 2 à 4 mètres de la partie la plus proche de la voile, planche ou pale (3).

8. Système selon l'une des revendications précédentes dans lequel il y a au moins deux voiles, planches ou pales séparées uniques (3) et elles ne sont pas placées sur le même essieu.

9. Système (1) selon l'une des revendications précédentes, dans lequel les une ou plusieurs voiles, planches ou pales séparées uniques (3) sont essentiellement placées à l'intérieur d'un tunnel routier.

10. Système (1) selon l'une des revendications précédentes, dans lequel le fluide pompé s'écoule dans des tuyaux qui sont au moins partiellement constitués de plastique recyclé, de préférence dans lequel le pourcentage en poids de matériau recyclé est d'au moins 10 %, de manière davantage préférée d'au moins 20 %, de manière davantage préférée encore de 30 %, de manière préférée entre toutes d'au moins 50 %.

11. Système (1) selon l'une des revendications précédentes dans lequel la voile, planche ou pale (3) comprend un matériau textile, tel qu'un matériau textile monté sur un cadre en matériau non textile.

12. Système (1) selon la revendication 11, dans lequel le matériau textile est au moins partiellement constitué de matériau recyclé, de préférence dans lequel le pourcentage en poids de matériau recyclé dans le matériau textile est d'au moins 10 %, de manière davantage préférée d'au moins 20 %, de manière davantage préférée encore de 30 %, de manière préférée entre toutes d'au moins 50 %.

13. Système (1) selon l'une des revendications précédentes, dans lequel la pompe ou les pompes (4) sont des pompes à piston.

14. Procédé de capture et de stockage d'énergie éolienne et de production d'électricité, **caractérisé en ce qu'**il utilise le système (1) de l'une des revendications précédentes.
